# EUROPÄISCHE PATENTSCHRIFT

(11) **EP 2 956 599 B1**
(45) Veröffentlichungstag und Bekanntmachung des Hinweises auf die Patenterteilung: **30.01.2019**
(21) Anmeldenummer: 14706771.4
(22) Anmeldetag: 05.02.2014
(51) Int. Cl.: E04F 13/08, E04F 15/18, E04F 15/02, F24D 3/14, F24D 3/16, E04C 2/52, E04C 2/32, F24D 5/10

(54) **STECKSYSTEM ZUR VERKLEIDUNG EINER OBERFLÄCHE EINES OBJEKTS**
PLUG-IN SYSTEM FOR CLADDING A SURFACE OF AN OBJECT
SYSTÈME À EMBOÎTEMENT POUR REVÊTIR UNE SURFACE D'UN OBJET

(30) Priorität: 13.02.2013 DE 102013002401
(43) Veröffentlichungstag der Anmeldung: 23.12.2015
(73) Patentinhaber: Ludwig, Thomas, 22946 Trittau (DE)
(72) Erfinder: Ludwig, Thomas, 22946 Trittau (DE)
(74) Vertreter: Lobemeier, Martin Landolf
(86) Internationale Anmeldenummer: PCT/DE2014/100034
(87) Internationale Veröffentlichungsnummer: WO 2014/124632

(56) Entgegenhaltungen:
- WO-A1-02/22986
- WO-A2-2006/091100
- DE-A1- 10 313 779
- FR-A1- 2 886 317
- US-A1- 2006 288 651

## Beschreibung

Die Erfindung betrifft ein Stecksystem zur Verkleidung einer Oberfläche eines Objekts mit einer ersten Platte, die auf ihrer einen Seite zur Befestigung an der Objektoberfläche eingerichtet ist und auf ihrer anderen Seite eine Mehrzahl von sich über die Plattenoberfläche erstreckenden, parallel zueinander angeordneten Erhebungen aufweist, wobei auf der ersten Platte benachbart angeordnete Erhebungen jeweils eine erste Aufnahme bilden, und einer zweiten Platte, die auf ihrer einen Seite ein Dekor trägt oder zur Aufnahme eines Dekors oder eines weiteren Verkleidungselements eingerichtet ist und auf ihrer anderen Seite eine Mehrzahl von sich über die Plattenoberfläche erstreckenden, parallel zueinander angeordneten Erhebungen aufweist, wobei die Erhebungen der zweiten Platte mit den auf der ersten Platte angeordneten Aufnahmen formschlüssig verbindbar sind und auf der zweiten Platte benachbart angeordnete Erhebungen jeweils eine zweite Aufnahme zur formschlüssigen Verbindung mit den Erhebungen der ersten Platte bilden.

Neben aus der DE 103 13 779 A1, der DE 101 19 057 A1 und der WO 2005/054598 A1 bekannten Stecksystemen, ist ein eingangs genanntes Stecksystem beispielsweise aus der DE 103 13 779 A1 zur Verlegung von Fliesen bekannt, wobei sich dieses vorbekannte System grundsätzlich zur Verkleidung aller möglichen Oberflächen eignet. Hierzu zählen z.B. Rohbauwände, Raumdecken, Innenverkleidungen für Schiffe, aber auch Möbel, wie beispielsweise Schränke, Küchenmöbel, Messestände etc.

Hierzu wird zunächst die erste Platte, die auf ihrer einen Seite im Wesentlichen eben ausgebildet ist, mit der Objektoberfläche durch Schrauben, Kleben oder anderer geeigneter Verbindungsmittel verbunden. Darauf wird die zweite Platte, die auf ihrer einen Seite bevorzugt bereits ein Dekor aufweist, formschlüssig mit der ersten Platte verbunden. Dieses kann beispielsweise durch Einschieben der Erhebungen der zweiten Platte in die Aufnahmen der ersten Platte erfolgen oder bei elastischer Ausbildung der Erhebungen durch Drücken der zweiten Platte auf die erste Platte und "Einschnappen" der Erhebungen der ersten Platte in die Aufnahmen der zweiten Platte.

Somit ist bereits ein Stecksystem bekannt, dass eine einfache, sichere Montage zur Verkleidung von Objektoberflächen erlaubt, wobei auch der Austausch des Dekors durch Austausch der zweiten Platte durch Lösen der zweiten Platte von der ersten Platte jederzeit schnell und einfach durchzuführen ist.

Andere Systeme sind beispielsweise aus der FR 2 886 317 A1, der US 2006/288651 A1 und der WO 02/22986 A1 bekannt.

Aufgabe der vorliegenden Erfindung ist es, das vorbekannte System zu verbessern und weiteren Anwendungen zugänglich zu machen, insbesondere für die Thermoregulierung von Innenräumen zu nutzen.

Diese Aufgabe wird durch das Stecksystem mit den Merkmalen gemäß Anspruch 1 gelöst. Die Unteransprüche geben vorteilhafte Ausgestaltungen der Erfindung wieder.

Grundgedanke der Erfindung ist es, das Stecksystem so auszubilden, dass nur die zweite das Dekor o.ä. tragende Platte mit sich über die Platte erstreckenden Erhebungen ausgebildet ist, wobei die erste Platte andersartig ausgebildete Erhebungen (ohne Kanäle) aufweist, die allein zur Befestigung der zweiten Platte geeignet sind. Erfindungsgemäß sind die Erhebungen der ersten Platte rasterartig ausgebildet, sodass die zweite Platte sowohl horizontal als auch vertikal angeordnet werden kann. Beispielsweise kann die erste Platte durch Fräsen einer zur zweiten Platte identisch ausgebildet Platte quer zu den Kapillarrohren mit derselben Profilform gebildet werden.

Die Erfindung wird anhand eines in den beigefügten Zeichnungen dargestellten, besonders bevorzugt ausgestalteten Ausführungsbeispiels erläutert. Es zeigen:
- Fig. 1: ein Stecksystem, bei dem die zweite Platte in Draufsicht (Fig. 1A) und im Querschnitt (Fig. 1B) dargestellt ist; und
- Fig. 2: eine erfindungsgemäß zur zweiten Platte ausgebildete erste Platte mit rasterar-tig angeordneten Erhebungen zur Befestigung der zweiten Platte in vertikaler oder horizontaler Ausrichtung in Seitenansicht (Fig. 2A) und in Draufsicht (Fig. 2B).

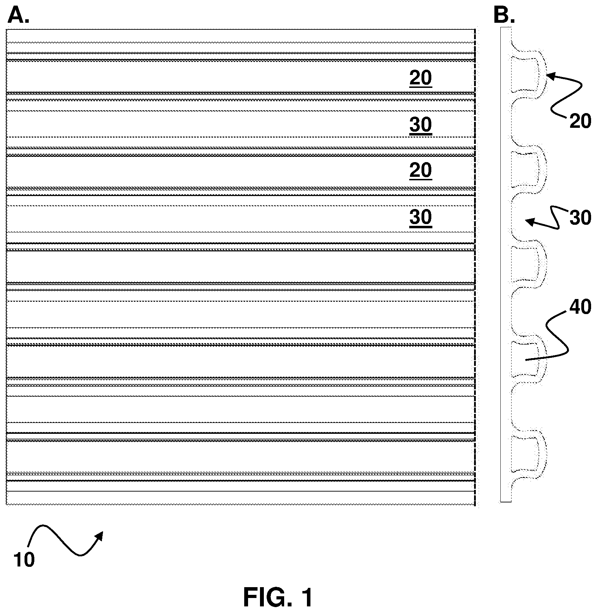

Fig. 1 zeigt ein besonders bevorzugt ausgestaltetes Stecksystem, bei dem die zweite Platte identisch in Draufsicht (Fig. 1A) und im Querschnitt (Fig. 1B) dargestellt ist.

Die erste Platte 10 ist bevorzugt als Extrusionsprofil aus beispielsweise Polypropylen, Polyethylen oder Kunststoff-Metall mit insbesondere guten Wärmeübergangseigenschaften ausgebildet, sodass eine sich endlos von links nach rechts erstreckende Platte hergestellt und auf eine gewünschte Länge zurecht geschnitten werden kann.

Die Platte 10 weist auf ihrer einen Oberfläche parallel zur Längs- und Fertigungsrichtung angeordnete Erhebungen 20 und zwischen diesen angeordnete Vertiefungen 30 auf, wobei die Vertiefungen 30 als Aufnahmen 30 für die Erhebungen der zweiten Platte dienen.

Im in Fig. 1B dargestellten Querschnitt ist zu erkennen, dass die in Fig. 1A der Ansicht abgewandte Unterseite der Platte 10 eben ausgebildet ist. Diese ebene Oberfläche ist einerseits zur Befestigung auf der Oberfläche eines zu verkleidenden Objekts oder andererseits zur Aufnahme eines Dekors oder eines weiteren Verkleidungselements geeignet. Dieses weitere Verkleidungselement kann beispielsweise eine Rigipsplatte oder ein Spiegel sein.

Die andere Seite der Platte 10 weist in Fig. 1B in den Erhebungen jeweils einen die Erhebungen durchziehenden Kanal 40 auf, der zur Aufnahme eines thermischen Fluids eingerichtet ist. Das thermische Fluid kann ein Gas oder Gasgemisch oder eine Flüssigkeit oder ein Flüssigkeitsgemisch sein, die die Platte 10 mit einer vorbestimmten Temperatur durchströmen. Dadurch kann das Objekt oder die Umgebung des Objekts temperiert, also gekühlt oder erwärmt werden.

Die Zuleitung und die Ableitung des thermischen Fluids erfolgt über die offenen Seiten der Kanäle an den Enden der Platte 10, wobei jeder Kanal einzeln gespeist sein kann. Bevorzugt ist aber eine Abschlussplatte vorgesehen, die die Kanäle zumindest teilweise untereinander verbindet, sodass wenigstens ein Zu- und ein Abfluss verbleibt. Die Abschlussplatte selbst weist hierzu wenigstens entweder nur die Kanäle verbindende Leitungen auf oder zusätzlich zu solchen Verbindungen auch eine thermisches Fluid zuführende und/oder eine thermisches Fluid abführende Leitung auf.

So kann die Platte 10 auf deren einen Seite eine erste Abschlussplatte aufweisen, die einen Zufluss und die Kanäle 40 untereinander verbindende Leitungen aufweist, und auf deren anderen Seite eine zweite Abschlussplatte aufweisen, die einen Abfluss und die Kanäle 40 untereinander verbindende Leitungen aufweist.

Das Vorsehen einer oder mehrerer unterschiedlich ausgebildeter Abschlussplatten schafft ein einfaches modulares System, wobei grundsätzlich auch auf derartige Abschlussplatten verzichtet werden kann und stattdessen Schlauchverbindungen verwendet werden können.

Die Kanal 40 führenden Erhebungen 20 sind insbesondere durch zwei sich von der Oberfläche der Platte 10 erstreckende Wandungen, die an ihren freien Enden mittels einer über die Außenseiten der Wandungen kragenden Überdachung verbunden sind, gebildet. Speziell sind die durch die Erhebungen 20 gebildeten Leisten so ausgebildet, dass diese durch Druck in die Aufnahmen 30 einrasten können. Hierfür sind die Wandungen leicht nach Innen in Richtung der Kanäle eingekerbt, wobei die Überdachungen die Wandungen leicht überkragen und in die Einkerbungen einrasten.

Die Rastverbindung zwischen den Platten ist durch Schieben oder Abheben der einen Platte von der anderen Platte lösbar.

Bei dem gezeigten Ausführungsbeispiel entsteht durch Zuwenden und Ineinanderrasten der die Erhebungen 20 und Aufnahmen 30 aufweisenden Oberflächen der Platten 10 zu beiden Seiten eine ebene Oberfläche, die durch Kleben oder andere Hilfsmittel an einer Oberfläche eines zu verkleidenden Objekts befestigt werden kann und auf der anderen Seite ein Dekor trägt oder aufnehmen oder zur Befestigung eines weiteren Verkleidungselements geeignet ist.

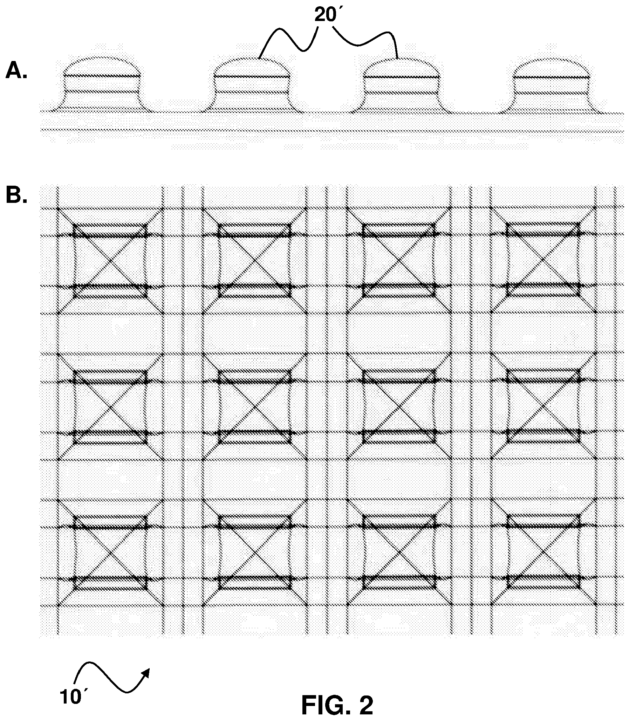

Fig. 2 zeigt eine alternativ zur zweiten Platte ausgebildete erste Platte mit rasterartig angeordneten Erhebungen zur Befestigung der zweiten Platte in vertikaler oder horizontaler Ausrichtung. Diese bevorzugt ausgestaltete Befestigungsplatte 10'wurde aus der in Fig. 1 dargestellten Platte 10 durch Ausfräsen von komplementär zu den Erhebungen ausgebildeten Abschnitten im rechten Winkel zur Längserstreckung der Erhebungen gebildet. So ist es möglich ein Objekt mit der Platte 10' zu versehen und anschließend zu entscheiden, ob die weitere (Dekor-) Platte 10 horizontal oder vertikal ausgerichtet an der Platte 10'befestigt werden soll. Entsprechend wird eine höhere Flexibilität beim Ausbau von Innenräumen etc. erreicht.

Das Stecksystem nach der Erfindung eignet sich zur Verkleidung von Außenfassaden, Innenräumen, Messebauwerken und Möbeln. Das System ist zudem als Wärmetauscher zu verwenden und daher als Solarkollektor zur Wärmegewinnung geeignet und/oder als Kühlsystem (bei Anbringung im Erdreich oder im Winter als Außenfläche z.B. für einen Kühlschrank) zu verwenden. In beiden Fällen ist das System im Vergleich zu bekannten Systemen extrem kostengünstig herzustellen und auf Grund der großen Austauschfläche effizient einzusetzen. Die Installation ist einfach und es werden nur eine Pumpe mit Steuereinheit und Rohrleitungen benötigt.

Als weitere Verwendung eignet sich das System auch zur Integration in Raum-Feuerlöschanlagen mit z.B. Sprinklern, wobei die wasserführenden Kapillaren des Stecksystems an die Sprinkler angeschlossen sind. Schließlich kann das System auch als Solarthermie-Kollektor verwendet werden.

## Patentansprüche

1. Stecksystem zur Verkleidung einer Oberfläche eines Objekts mit
- einer ersten Platte (10'), die auf ihrer einen Seite eine Mehrzahl von auf der Plattenoberfläche rasterförmig angeordneten Erhebungen (20') aufweist; und
- einer zweiten Platte (10), die auf ihrer einen Seite eine Mehrzahl von sich über die Plattenoberfläche erstreckenden, parallel zueinander angeordneten Erhebungen aufweist, wobei die Erhebungen der zweiten Platte (10) mit den auf der ersten Platte (10') angeordneten Aufnahmen (30) formschlüssig verbindbar sind und auf der zweiten Platte (10) benachbart angeordnete Erhebungen jeweils eine Aufnahme zur formschlüssigen Verbindung mit den Erhebungen (20') der ersten Platte (10') bilden,
**dadurch gekennzeichnet, dass**
- in wenigstens einer Erhebung (20) der zweiten Platte (10) ein die Erhebung (20) durchziehender Kanal (40) zur Aufnahme eines thermischen Fluids vorgesehen ist
und
- an der zweiten Platte (10) ein erster Anschluss zum Einleiten des thermischen Fluids in den wenigstens einen Kanal (40) und ein zweiter Anschluss zum Abführen des thermischen Fluids aus dem wenigstens einen Kanal (40) vorgesehen ist,
wobei eine der beiden Platten (10, 10') auf ihrer den Erhebungen (20, 20') gegenüberliegenden Seite zur Befestigung an der Objektoberfläche eingerichtet ist und die andere der beiden Platten (10, 10') auf ihrer den Erhebungen (20, 20') gegenüberliegenden Seite ein Dekor trägt oder zur Aufnahme eines Dekors oder eines weiteren Verkleidungselements eingerichtet ist.

## Claims

1. Plug-in system for cladding a surface of an object, comprising
- a first panel (10'), which, on one side, has a plurality of raised portions (20') arranged in a grid pattern on the panel surface, and
- a second panel (10), which, on one side, has a plurality of mutually parallel raised portions that extend over the panel surface, it being possible to interlock the raised portions on the second panel (10) with the receiving portions (30) arranged on the first panel (10') and raised portions arranged adjacently on the second panel (10) each forming a receiving portion for interlocking with the raised portions (20') on the first panel (10'),
**characterized in that**
- in at least one raised portion (20) on the second panel (10), a channel (40) penetrating the raised portion (20) is provided in order to receive a thermal fluid,
and
- a first connection for introducing the thermal fluid into the at least one channel (40) and a second connection for discharging the thermal fluid from the at least one channel (40) is provided on the second panel (10),
one of the two panels (10, 10') being designed to be fastened to the surface of the object on the side thereof facing the raised portions (20, 20') and the other of the two panels (10, 10') having a decorative finish or being designed to receive a decorative finish or another cladding element on the side thereof facing the raised portions (20, 20').

## Revendications

1. Système enfichable, destiné à habiller une surface d'un objet, comprenant
- une première plaque (10') qui comporte sur un de ses côtés une pluralité de saillies (20') disposées sous la forme d'une trame sur la surface de la plaque et
- une deuxième plaque (10) qui comporte sur un de ses côtés une pluralité de saillies parallèles les unes aux autres et s'étendant sur la surface de la plaque, les saillies de la deuxième plaque (10) pouvant être reliées par complémentarité de formes aux logements (30) disposés sur la première plaque (10') et des saillies disposées de manière adjacente sur la deuxième plaque (10) formant chacune un logement destiné à être relié par complémentarité de formes aux saillies (20') de la première plaque (10'),
**caractérisé en ce que**
- un conduit (40), traversant la saillie (20) et destiné à recevoir un fluide thermique, est ménagé dans au moins une saillie (20) de la deuxième plaque (10),
et
- un premier raccord, destiné à introduire le fluide thermique dans l'au moins un conduit (40), et un deuxième raccord, destiné à évacuer le fluide thermique de l'au moins un conduit (40), sont prévus au niveau de la deuxième plaque (10),
l'une des deux plaques (10, 10') étant adaptée sur son côté opposé aux saillies (20, 20') pour être fixée à la surface de l'objet et l'autre des deux plaques (10, 10') portant un décor sur son côté opposé aux saillies (20, 20') ou étant adaptée pour recevoir un décor ou un autre élément d'habillage.
